# EUROPEAN PATENT SPECIFICATION

(11) **EP 3 996 341 B1**
(45) Date of publication and mention of the grant of the patent: **07.06.2023**
(21) Application number: 19939047.7
(22) Date of filing: 25.07.2019
(51) Int. Cl.: H04L 69/04, H04L 69/22, H04L 69/40

(54) **METHOD FOR TRANSMITTING DATA, SENDING END DEVICE AND RECEIVING END DEVICE**
VERFAHREN ZUM SENDEN VON DATEN, SENDESEITIGE VORRICHTUNG UND EMPFANGSSEITIGE VORRICHTUNG
PROCÉDÉ DE TRANSMISSION DE DONNÉES, DISPOSITIF D'EXTRÉMITÉ D'ENVOI ET DISPOSITIF D'EXTRÉMITÉ DE RÉCEPTION

(43) Date of publication of application: 11.05.2022
(73) Proprietor: GUANGDONG OPPO MOBILE TELECOMMUNICATIONS CORP., LTD., Dongguan, Guangdong 523860 (CN)
(72) Inventor: YANG, Ning, Dongguan, Guangdong 523860 (CN)
(74) Representative: Taor, Simon Edward William
(86) International application number: PCT/CN2019/097699
(87) International publication number: WO 2021/012260

(56) References cited:
- WO-A1-2014/048499
- WO-A1-2015/028054
- WO-A1-2016/070615
- WO-A1-2019/034130
- CN-A- 1 913 534
- CN-A- 101 409 677
- CN-A- 107 347 046
- CN-A- 108 476 475
- US-A1- 2016 127 882
- US-A1- 2019 116 521

## Description

### BACKGROUND

### FIELD

The embodiments of the present application relate to the field of communication technology, and more specifically, to a method for transmitting data, a sending end device, and a receiving end device.

### BACKGROUND

5G industrial internet of things (IIoT) needs to support a transmission of services such as factory automation, transport industry, and electrical power distribution in a 5G system. Based on its transmission requirements of delay and reliability, IIoT introduces a concept of time sensitive networking (TSN) or time sensitive communication (TSC) and requires header compression for TSN services. The TSC service can be borne by an Ethernet frame or by an Internet protocol (IP) packet.

For the case where both Ethernet packet and IP packet exist in a bearer, if at least one of the Ethernet packet and the IP packet is configurable or supports header compression, a receiver or a decompressor cannot determine whether it is an Ethernet packet or an IP packet after receiving a packet. This will not be able to decompress in a suitable way, nor will it be able to decode and process packets in a suitable way. US20190116521A1 is a related prior art for this field. More particularly, US20190116521A1 discloses that a radio access network receives from an access and mobility management function, a first message including an Ethernet packet filter set for a wireless device. US20160127882A1 is a related prior art for this field. More particularly, US20160127882A1 discloses that a method of transmitting data in a device to device communication system includes determining whether a security feature is applied to one or more packet data convergence protocol (PDCP) data units, configuring the one or more PDCP data units based on the determined result, and transmitting the one or more PDCP data units to one or more receiving user equipments (UEs). WO2016070615A1 is a related prior art for this field. More particularly, WO2016070615A1 discloses that a device to device (D2D) data transmission method includes determining PDCP header compression indication information used for indicating whether a D2D communication sending UE implements PDCP header compression processing of a PDCP protocol data unit (PDU), and/or PDCP encryption indication information used for indicating whether the D2D communication sending UE implements PDCP encryption processing of a PDCP PDU (S202), and sending the PDCP header compression indication information and/or PDCP encryption information to a D2D communication receiving UE (S204).

### SUMMARY

The embodiments of the present application provide a method for transmitting data and a sending end device, which can improve data transmission efficiency.

In a first aspect, a method for transmitting data is provided as set out in claim 1. Optional features are set out in claims 2 to 8.

In a second aspect, a sending end device is provided as set out in claim 9. Optional features are set out in claims 10 to 15.

Through the above technical solution, type information is included in the PDCP PDU to determine the type of the data packet encapsulated in the PDCP PDU. Especially for the case where both IP packet and Ethernet packet are mapped in the same bearer. This enables the receiving end device to differentiate between received packets. This avoids the failure of decoding and decompression at a decompression end, thereby avoiding unnecessary data transmission errors and retransmissions, and also avoids serious problems such as waste of air interface resources and network disconnection of a terminal device.

### BRIEF DESCRIPTION OF THE DRAWINGS

FIG. 1 is a schematic diagram of a communication system architecture provided by an embodiment of the present application.
FIG. 2 is a schematic flowchart of a method for transmitting data provided by an embodiment of the present application.
FIG. 3 is another schematic flowchart of a method for transmitting data provided by an embodiment of the present application.
FIG. 4 is a schematic diagram of a format of a PDCP PDU with a 12-bit PDCP SN provided by an embodiment of the present application.
FIG. 5 is a schematic diagram of a format of a PDCP PDU with a PDCP SN of 18 bits provided by an embodiment of the present application.
FIG. 6 is another schematic flowchart of a method for transmitting data provided by an embodiment of the present application.
FIG. 7 is still another schematic flowchart of a method for transmitting data provided by an embodiment of the present application.
FIG. 8 is a schematic diagram of an SDAP PDU provided by an embodiment of the present application.
FIG. 9 is another schematic flowchart of a method for transmitting data provided by an embodiment of the present application.
FIG. 10 is another schematic flowchart of a method for transmitting data provided by an embodiment of the present application.
FIG. 11 is another schematic flowchart of a method for transmitting data provided by an embodiment of the present application.
FIG. 12 is a schematic block diagram of a sending end device provided by an embodiment of the present application.
FIG. 13 is a schematic block diagram of a receiving end device provided by an embodiment of the present application.
FIG. 14 is a schematic block diagram of a communication device provided by an embodiment of the present application.
FIG. 15 is a schematic block diagram of a chip provided by an embodiment of the present application.
FIG. 16 is a schematic diagram of a communication system provided by an embodiment of the present application.

### DETAILED DESCRIPTION OF ILLUSTRATED EMBODIMENTS

The technical solutions in the embodiments of the present application will be described below with reference to the accompanying drawings in the embodiments of the present application. Obviously, the described embodiments are some, but not all, embodiments of the present application. Based on the embodiments in the present application, all other embodiments obtained by those of ordinary skill in the art without creative efforts shall fall within the protection scope of the present application.

The technical solutions of the embodiments of the present disclosure can be applied to various communication systems, such as a global system for mobile communications (GSM), a code division multiple access (CDMA) system, and a wideband code division multiple access (WCDMA) system, a general packet radio service (GPRS) system, a long term evolution (LTE) system, a LTE frequency division duplex (FDD) system, a LTE time division duplex (TDD) system, a universal mobile telecommunication system (UMTS), a worldwide interoperability for microwave access (WiMAX) communication system or the 5th generation (5G) system and so on.

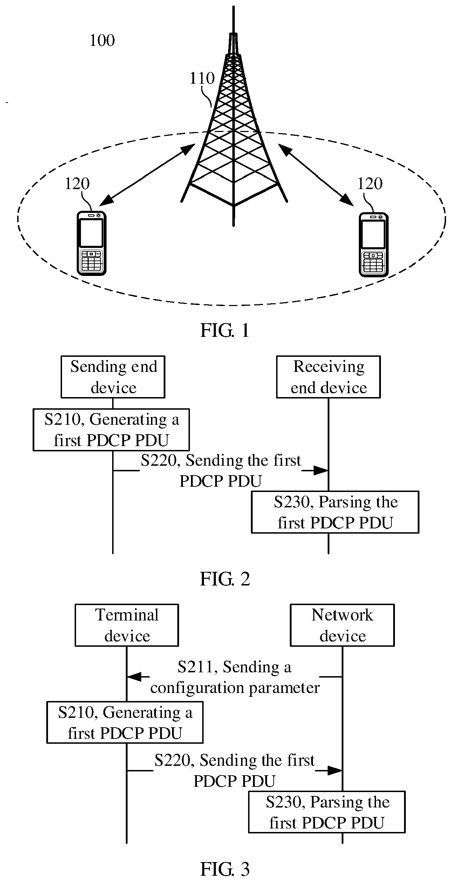

For example, a communication system 100 where embodiments of the present disclosure are applied is shown in FIG. 1. The communication system 100 may include a network device 110, which may be a device that communicates with a terminal 120 (or referred to as a communication terminal or terminal). The network device 110 may provide communication coverage for a certain geographic area and may communicate with terminals in the area. Optionally, the network device 110 may be a base transceiver station (BTS) in a GSM system or a CDMA system, or a Node B (NB) in a WCDMA system or an evolutional Node B (eNB or eNodeB) in an LTE system, or a radio controller in a cloud radio access network (CRAN). Optionally, the network device may be a network side device in a mobile switching center, a relay station, an access point, a vehicle-mounted device, a wearable device, a hub, a switch, a network bridge, a router or the 5G network, or a network device in the future evolution of the public land mobile network (PLMN), etc.

The communication system 100 further includes at least one terminal 120 located within the coverage area of the network device 110. The "Terminal" as used herein includes, but is not limited to, a connection via a wired line, such as a connection via public switched telephone networks (PSTN), a digital subscriber line (DSL), a digital cable, and a direct cable; and/or another data connection/network; and/or via a wireless interface, such as cellular network, wireless local area network (WLAN), digital television network such as DVB-H network, satellite network and an AM-FM broadcast transmitter; and/or a device of another terminal set to receive/send communication signals; and/or an Internet of things (IOT) device. The terminal set to communicate through the wireless interface may be referred to as "a wireless communication terminal," "a wireless terminal," or "a mobile terminal." Examples of the mobile terminal includes, but is not limited to, a satellite or cellular phone; a personal communications system (PCS) terminal that may combine a cellular radiophone with data processing, fax, and data communication capabilities; a PDA that may include a radiophone, a pager, an Internet/Intranet access, a web browser, a note, a calendar, and/or a global positioning system (GPS) receiver; and a conventional laptop and/or palmtop receiver or other electronic devices including a radiophone transceiver. The terminal may refer to an access terminal, user equipment (UE), a subscriber unit, a subscriber station, a mobile station, a mobile platform, a remote station, a remote terminal, a mobile device, a user terminal, a terminal, a wireless communication device, a user agent or a user apparatus. The access terminal may be the cellular phone, a cordless telephone, a session initiation protocol (SIP) phone, a wireless local loop (WLL) station, the personal digital assistant (PDA), a handheld device, a computing device having wireless connection functions or other processing device connected to a wireless modem, a vehicle-mounted device, a wearable device, a terminal in the 5G network or a terminal in the future evolving PLMN, etc.

Optionally, device to device (D2D) communication may be performed between the terminals 120.

Optionally, the 5G system or 5G network may also be referred to as a new radio (NR) system or NR network

FIG. 1 illustrates schematically one network device and two terminals. Optionally, the communication system 100 may include a plurality of network devices, and other number of terminals may be included within the coverage of each network device, which is not limited in the embodiments of the present disclosure.

Optionally, the communication system 100 may further include other network entities such as a network controller and a mobility management entity, which is not limited in the embodiment of the present disclosure.

It should be understood that a device with communication functions in the network/system in the embodiments of the present disclosure may be referred to as a communication device. Taking the communication system 100 shown in FIG. 1 as an example, the communication device may include the network device 110 and the terminal 120 with communication functions, and the network device 110 and the terminal 120 may be specific devices described above, which will not be repeated here; and the communication device may also include other devices in the communication system 100, such as the network controller, the mobile management entity and other network entities, which are not limited in the embodiments of the present disclosure.

It should be understood that the terms "system" and "network" herein are generally interchangeable herein. The term "and/or" herein is only used to describe an association relationship between associated objects, which represents that there may be three kinds of relationships. For example, A and/or B may represent three situations: A exists alone, A and B exist at the same time, and B exists alone. In addition, the character "I" herein generally represents an "or" relationship between pre and post associated objects.

In the existing communication system, only header compression is supported for data packets whose session is IP in a protocol data unit (PDU). In a 5G NR system, the type of PDU session can be not only the IP packet type, but also the Ethernet frame type. In details, for the PDU layer, when the PDU session type is IPv4, IPv6 or IPv4v6, the PDU session corresponds to IPv4 packets and/or IPv6 packets. When the PDU session type is Ethernet, the PDU session corresponds to Ethernet frames.

Packet data convergence protocol (PDCP) introduces header compression and decompression functions, for example, header compression for IP data packets. The current robust header compression (RoHC) is configured for a data resource bearer (DRB). The compression end and the decompression end use different header compression methods and header compression parameters according to the configured profile and use an RoHC protocol to perform compression and decompression processing.

In addition, according to the conclusion of the RAN2#105bis conference, a new header compression mechanism (a mechanism completely within the 3rd generation partnership project (3GPP)) can also be used to perform header compression on Ethernet packets.

Therefore, there may be a case where both Ethernet packet and IP packet are carried in a bearer. If at least one of the Ethernet packet and the IP packet is configurable or supports header compression, a receiver or a decompressor cannot determine whether it is an Ethernet packet or an IP packet after receiving a packet. This also cannot be decompressed in a suitable way, nor will it be able to decode and process packets in a suitable way. Therefore, the embodiments of the present application provide a method for transmitting data, which can solve the above problems.

FIG. 2 is a schematic flowchart of a method 200 for transmitting data according to an embodiment of the present application. The method 200 may be performed by a sending end device and a receiving end device, and the sending end device may be a network device or a terminal device. Correspondingly, the receiving end device may be a terminal device or a network device. For example, the method 200 can be used for uplink data transmission, that is, the sending end device is a terminal device, and the receiving end device is a network device. For another example, the method 200 can also be used for downlink data transmission, that is, the sending end device is a network device, and the receiving end device is a terminal device. Moreover, the network device may be the network device as illustrated in FIG. 1, and the terminal device may be the terminal device as illustrated in FIG. 1.

As illustrated in FIG. 2, the method 200 includes: S210, generating a first PDCP PDU, that is, the sending end device generates the first PDCP PDU. The first PDCP PDU includes type information, and the type information is used for the receiving end device to determine that a type of a first data packet in the first PDCP PDU is one of an Ethernet data packet, an Internet protocol (IP) data packet, and an Ethernet data packet comprising an IP packet header. Alternatively, the type information may also be used for the receiving end device to determine that the type of the first data packet in the first PDCP PDU is another type. For example, it may also be an IP packet including an Ethernet data packet header, and the embodiment of the present application is not limited to this.

It should be understood that the first data packet in this embodiment of the present application may refer to any data packet. The sending end device maps the first data packet to the corresponding bearer at the service data adaptation protocol (SDAP) layer. For example, the SDAP layer maps the first data packet to a corresponding bearer according to its quality of service (QoS) feature. For example, a QoS flow identifier (QoS flow ID, QFI) may be carried in the SDAP packet. According to the mapping relationship between the QFI and the DRB, the DRB corresponding to the first data packet can be determined.

Optionally, the first data packet may be mapped to the same DRB with other types of data packets. For example, the first data packet and the second data packet are mapped to the same DRB, but the type of the first data packet is different from that of the second data packet. At this time, the receiving end device needs to determine the type of the first data packet in the received first PDCP PDU, so as to parse or decompress the first PDCP PDU, and then obtain the first data packet.

It should be understood that the method 200 may further include: the sending end device determining the type of the first data packet such that when header compression processing is required for the first data packet, the sending end device performs header compression processing on the first data packet at the PDCP layer according to the type of the first data packet, and then generates the first PDCP PDU.

Optionally, for the uplink data transmission process, that is, the case where the sending end device is a terminal device, and the receiving end device is a network device, before the terminal device performs header compression processing on the first data packet according to the type of the first data packet, the method 200 may further include: the terminal device receiving a compression configuration parameter sent by the network device, such that the terminal device can perform header compression processing on the first data packet according to the compression configuration parameter.

Optionally, for the downlink data transmission process, that is, the case where the sending end device is a network device, and the receiving end device is a terminal device, the method 200 may further include: the network device performing header compression processing on the first data packet according to the compression configuration parameter, and sending the compression configuration parameter to the terminal device, such that the terminal device can decompress the first data packet according to according to the compression configuration parameter.

It should be understood that the compression configuration parameter sent by the above-mentioned network device to the terminal device may be located in a radio resource control (RRC) message. That is, the network device sends the RRC message to the terminal device, where the RRC message includes compression configuration parameter.

As illustrated in FIG. 2, the method 200 further includes: S220, sending a first PDCP PDU, the sending end device generating the first PDCP PDU at the PDCP layer, continuing to transmit the first PDCP PDU to a bottom layer, and sending data including the first PDCP PDU to the receiving end device through the bottom layer. For example, the sending end device may transmit data including the first PDCP PDU through a physical layer. Correspondingly, the bottom layer of the receiving end device receives the data sent by the sending end device and transmits it to the PDCP layer of a receiving end. Then the receiving end device can receive the first PDCP PDU at the PDCP layer. The first PDCP PDU includes type information.

As illustrated in FIG. 2, the method 200 further includes: S230, parsing the first PDCP PDU, and the receiving end device determining, according to the type information included in the first PDCP PDU, that the type of the first data packet in the first PDCP PDU is one of an Ethernet data packet, an Internet protocol (IP) data packet, and an Ethernet data packet comprising an IP packet header.

Further, the method 200 may further include that: the receiving end device parses or decompresses the first PDCP PDU according to the type of the first data packet to obtain the first data packet. In details, the sending end device may perform header compression processing on different types of data packets. Therefore, the receiving end device needs to determine the type of the first data packet in the first PDCP PDU in order to perform decompression processing on the first PDCP PDU, and then obtain the first data packet in the first PDCP PDU.

It should be understood that each step of the method 200 in this embodiment of the present application is described above from the perspectives of the sending end device and the receiving end device. The method 200 will be described in detail below with reference to specific embodiments for different situations of the type information in the first PDCP PDU.

Optionally, as a first embodiment, bits occupied by the type information in the first PDCP PDU may be reserved bits of the first PDCP PDU. In details, the method 200 may further include: the sending end device determining the type information. For example, taking the type of the first data packet as any one of an Ethernet data packet, an IP data packet, and an Ethernet data packet including an IP packet header, that is to say, the method 200 further includes at least one of the following steps: if the type of the first data packet is the Ethernet data packet, the sending end device determines that a value of the bits occupied by the type information is a first value; if the type of the first data packet is the IP data packet, the sending end device determines that the value of the bits occupied by the type information is a second value; and if the type of the first data packet is the Ethernet data packet comprising the IP packet header, the sending end device determines that the value of the bits occupied by the type information is a third value.

The following will introduce the uplink and downlink transmission processes respectively with reference to specific embodiments.
1. For the uplink data transmission process, that is, the sending end device in the method 200 is a terminal device, and the receiving end device is a network device. FIG. 3 illustrates another schematic diagram of a method 200 for transmitting data according to an embodiment of the present application. FIG. 3 is a possible implementation of the method 200 as illustrated in FIG. 2. The terminal device in FIG. 3 corresponds to the sending end device in FIG. 2, and the network device in FIG. 3 corresponds to the receiving end device in FIG. 2.

As illustrated in FIG. 3, the method 200 includes: S211, sending a configuration parameter, that is, the network device sends the configuration parameter to the terminal device, and the configuration parameter can be used by the terminal device to generate the first PDCP PDU in S210.

In details, the network device may configure the DRB corresponding to the data packet of the terminal device through the configuration parameter. For example, different types of data of the terminal device can be mapped to the same DRB. For example, the network device configures the terminal device to map the first data packet and the second data packet to the same DRB.

In addition, the configuration parameter may further include indication information, and the network device may use the indication information to instruct the terminal device whether to perform header compression processing on a certain data packet. For example, the indication information may instruct the terminal device to perform header compression processing on the first data packet.

Additionally, the configuration parameter may also include compression configuration parameter. That is, the network device can also configure the compression configuration parameter used by the terminal device to perform header compression processing of different types of data packets through the configuration parameter. For example, the compression configuration parameter may include header compression parameter for IP packet and/or header compression parameter for Ethernet packet.

In addition, the configuration parameter may further include indication information of whether to use the first PDCP PDU. For example, when the network device configures the terminal device to map different types of data to the same DRB, the terminal device is instructed to use the first PDCP PDU to process or encapsulate the data. The first PDCP PDU contains type information of the first data packet.

Optionally, the configuration parameter may be located in the RRC, that is, the network device sends an RRC message to the terminal device, and the RRC message includes the configuration parameter.

As illustrated in FIG. 3, the method 200 further includes: S210, generating a first PDCP PDU, that is, the terminal device generates the first PDCP PDU at the PDCP layer. In details, the terminal device may determine the data packet carried in the DRB according to the configuration information of the network device. Here, any data packet is taken as an example, that is, the first data packet is taken as an example. The terminal device may further determine whether header compression processing needs to be performed on the first data packet, and the corresponding header compression parameter.

It should be understood that the terminal device receives the first data packet sent by the higher layer at the PDCP layer and determines the type of the first data packet. That is, the terminal device parses the high-layer data packet, and determines the type of the first data packet according to the format of the first data packet. For example, the terminal device may determine whether the first data packet is an IP packet, an Ethernet packet, or an Ethernet packet further carrying an IP header.

Further, if the terminal device determines that the network device at the receiving end needs to distinguish the type of the first data packet, the type information may be carried by the reserved bits in the generated first PDCP PDU to indicate the type of the first data packet in the first PDCP PDU. For example, the terminal device may determine, according to the configuration information sent by the network device, that header compression processing is required for the first data packet, and the network device needs to distinguish the types of the first data packet.

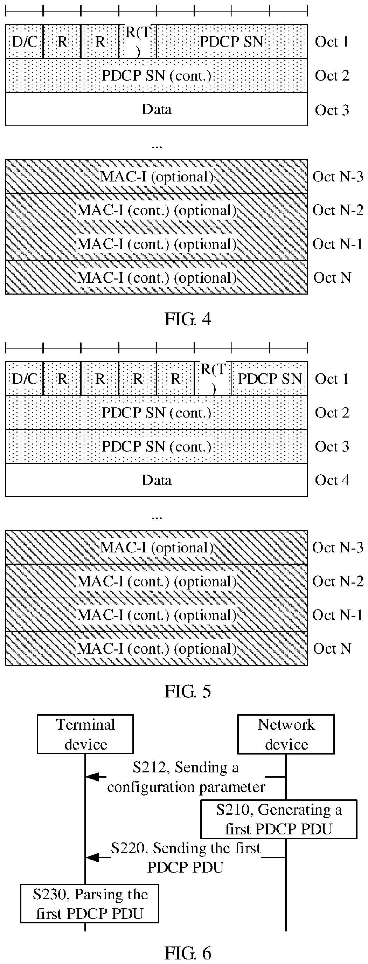

For example, FIG. 4 illustrates a schematic diagram of the format of a PDCP PDU with a 12-bit PDCP sequence number (SN). FIG. 5 illustrates a schematic diagram of the format of a PDCP PDU with a PDCP SN of 18 bits. It is assumed here that the PDCP PDU illustrated in FIG. 4 and FIG. 5 is the first PDCP PDU. In the first PDCP PDU, each row represents an octet (Oct) of 8 bits. D/C indicates data/control, that is, indicates whether the first PDCP PDU is a PDCP data PDU or a PDCP control PDU. R means reserved bits. The PDCP SN field is used to carry the PDCP SN of the first PDCP PDU. The data field part can be used to carry data. For example, the data field may include SDAP PDUs received from the SDAP layer. That is, the data field includes the first data packet. Optionally, the first PDCP PDU may further include other fields. For example, a MAC-I field may also be included, where the MAC-I field carries authentication code information and may be used for integrity protection verification. In addition, "cont." in FIG. 4 means continuous. For example, the PDCP SN (cont.) in FIG. 4 indicates that it is continuous with the previous field PDCP SN.

If the terminal device determines that the type of the first data packet needs to be indicated, it can set any one or more reserved bits (i.e., the R field) in the first PDCP PDU as illustrated in FIG. 4 and FIG. 5 to be used for carrying type information. For example, this type of information may occupy only 1 bit. The T field illustrated in FIG. 4 and FIG. 5 indicates that the original reserved bit R can be used as 1-bit type information. When the type of the first data packet is an IP packet, the value of the type information indicates 1. When the type of the first data packet is an Ethernet packet, the value of the type information indicates 0. For another example, the type information may also be set to occupy multiple bits, and the type corresponding to the indication of the first data packet may be one of two or more types. For another example, when an IP header is further carried in the Ethernet packet, three types of data packets, namely IP packet, Ethernet packet, and Ethernet+IP packet, appear. Then, the number of bits occupied by this type of information can be extended to 2 bits to indicate the three types of data packets respectively. As another example, there are at most three packet types supported or configured. Regardless of whether there are three types of data packets corresponding to the bearer, 2 bits are occupied.

Optionally, if the terminal device determines that it is not necessary to indicate the type of the first data packet, the field representing the type information may be a reserved bit, it is not used to indicate the type of the first data packet, and the embodiment of the present application is not limited to this.

As shown in FIG. 3, the method 200 further includes: S220, sending a first PDCP PDU, that is, the sending end terminal device sends the first PDCP PDU to a network device. This step corresponds to S220 in the method 200 illustrated in FIG. 2 and is applicable to the description of S220 in the method 200 illustrated in FIG. 2, which is not repeated here for brevity.

As illustrated in FIG. 3, the method 200 further includes: parsing the first PDCP PDU, that is, the network device receives the first PDCP PDU from the terminal device at the PDCP layer. According to the type information included in the first PDCP PDU, the type of the first data packet in the first PDCP PDU can be determined. Then, according to the type of the first data packet, corresponding decompression, decoding, or parsing processing is performed on the first PDCP PDU to obtain the first data packet.

For example, if the value of the bit occupied by the type information is the first value, the network device at the receiving end determines that the type of the first data packet is an Ethernet data packet. For example, if the value of the bit occupied by the type information is the second value, the network device determines that the type of the first data packet is an IP data packet. For example, if the value of the bit occupied by the type information is a third value, the network device determines that the type of the first data packet is an Ethernet data packet including an IP packet header.

2. For the downlink data transmission process, that is, the sending end device in the method 200 is a network device, and the receiving end device is a terminal device. FIG. 6 illustrates yet another schematic diagram of a method 200 for transmitting data according to an embodiment of the present application. FIG. 6 is another possible implementation of the method 200 illustrated in FIG. 2. The terminal device in FIG. 6 corresponds to the receiving end device in FIG. 2, and the network device in FIG. 6 corresponds to the sending end device in FIG. 2.

As illustrated in FIG. 6, the method 200 includes: S212, sending a configuration parameter, that is, the network device sends the configuration parameter to the terminal device, and the configuration parameter can be used by the terminal device to parse the first PDCP PDU in S230.

For example, the configuration parameter may include indication information, and the network device may use the indication information to indicate whether the terminal device needs to perform decompression processing on the data packet. For example, the indication information may indicate that the terminal device needs to perform decompression processing on the first data packet.

Additionally, the configuration parameter may also include a compression configuration parameter. That is, the network device can also configure the (de)compression configuration parameter used by the terminal device to perform decompression processing of different types of data packets through the configuration parameter. For example, the compression configuration parameter may include a compression parameter of IP data packet and/or a compression parameter of Ethernet data packet, such that the terminal device can select corresponding compression parameter to perform decompression processing according to the type of the data packet.

In addition, the configuration parameter may further include indication information of whether to use the first PDCP PDU. For example, when the network device is configured to map different types of data to the same DRB, the terminal device is instructed to use the first PDCP PDU to parse or decode the data. The first PDCP PDU contains type information of the first data packet.

Optionally, the configuration parameter may be located in the RRC, that is, the network device sends an RRC message to the terminal device, and the RRC message includes the configuration parameter.

As illustrated in FIG. 6, the method 200 further includes: S210, generating a first PDCP PDU, that is, the network device generates the first PDCP PDU at the PDCP layer. In details, the network device determines whether header compression processing needs to be performed on the first data packet, and when compression is required, performs header compression processing on the first data packet.

In details, the network device determines the type of the first data packet and performs header compression processing on the first data packet according to the type of the first data packet. For example, the network device may determine whether the first data packet is an IP packet, an Ethernet packet, or an Ethernet packet further carrying an IP header.

Similar to S210 in the method 200 illustrated in FIG. 3, if the network device determines that the type of the first data packet needs to be distinguished, the type information may be carried by the reserved bits in the generated first PDCP PDU, which is used to indicate the type of the first data packet in the first PDCP PDU.

As illustrated in FIG. 4 and FIG. 5, if the network device determines that the type of the first data packet needs to be indicated, any one or more reserved bits (i.e., R field) is set to be used to carry type information. For example, this type of information may occupy only 1 bit. The T field illustrated in FIG. 4 and FIG. 5 indicates that the original reserved bit R can be used as 1-bit type information. When the type of the first data packet is an IP packet, the value of the type information indicates 1. When the type of the first data packet is an Ethernet packet, the value of the type information indicates 0. For another example, the type information may also be set to occupy multiple bits, and the type corresponding to the indication of the first data packet may be one of two or more types. For another example, when an IP header is further carried in the Ethernet packet, three types of data packets, namely IP packet, Ethernet packet, and Ethernet+IP packet, appear. Then, the number of bits occupied by this type of information can be extended to 2 bits to indicate the three types of data packets respectively. As another example, there are at most three packet types supported or configured. Regardless of whether there are three types of data packets corresponding to the bearer, 2 bits are occupied.

Optionally, if the network device determines that it is not necessary to indicate the type of the first data packet, the field representing the type information may be a reserved bit, it is not used to indicate the type of the first data packet, and the embodiment of the present application is not limited to this.

As illustrated in FIG. 6, the method 200 further includes: S220, sending a first PDCP PDU, that is, the network device at the sending end sends the first PDCP PDU to the terminal device. This step corresponds to S220 in the method 200 illustrated in FIG. 2 and is applicable to the description of S220 in the method 200 illustrated in FIG. 2, which is not repeated here for brevity.

As illustrated in FIG. 6, the method 200 further includes: parsing the first PDCP PDU, that is, the terminal device receives the first PDCP PDU from the network device at the PDCP layer. According to the type information included in the first PDCP PDU, the type of the first data packet in the first PDCP PDU can be determined. Then, according to the type of the first data packet, corresponding decoding or parsing processing is performed on the first PDCP PDU to obtain the first data packet. The terminal device may perform corresponding decompression or decoding or parsing processing on the first PDCP PDU according to the compression configuration parameter sent by the network device to obtain the first data packet.

For example, if the value of the bit occupied by the type information is the first value, the terminal device at the receiving end determines that the type of the first data packet is an Ethernet data packet. For example, if the value of the bit occupied by the type information is the second value, the terminal device determines that the type of the first data packet is an IP data packet. For example, if the value of the bit occupied by the type information is a third value, the terminal device determines that the type of the first data packet is an Ethernet data packet including an IP header.

Optionally, as a second embodiment, the type information may also multiplex other fields in the first PDCP PDU. For example, the type information may also be the first QFI of the first data packet. In details, the method 200 may further include: the sending end device determines, according to the first mapping relationship between the QFI and the data packet type, that the data packet type corresponding to the first QFI is the type of the first data packet.

Optionally, as illustrated in FIG. 4 and FIG. 5, the first PDCP PDU includes a data field, and the data field may include the first QFI. For example, the data field includes the SDAP PDU sent by the SDAP layer, and the SDAP PDU includes the first QFI.

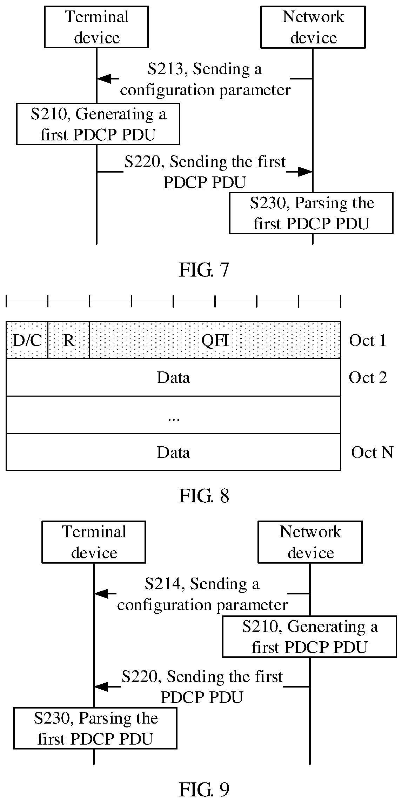

The following will introduce the uplink and downlink transmission processes respectively with reference to specific embodiments.
1. For the uplink data transmission process, that is, the sending end device in the method 200 is a terminal device, and the receiving end device is a network device. FIG. 7 illustrates yet another schematic diagram of a method 200 for transmitting data according to an embodiment of the present application. FIG. 3 is yet another possible implementation of the method 200 illustrated in FIG. 2. The terminal device in FIG. 7 corresponds to the sending end device in FIG. 2, and the network device in FIG. 7 corresponds to the receiving end device in FIG. 2.

As illustrated in FIG. 7, the method 200 includes: S213, sending a configuration parameter, that is, the network device may send the configuration parameters to the terminal device.

In details, the configuration parameter sent by the network device to the terminal device in S213 may be used by the terminal device to generate the first PDCP PDU in S210. The configuration parameter corresponds to the configuration parameter sent in S211 illustrated in FIG. 3, are applicable to the description in S211 illustrated in FIG. 3 and are not repeated here for brevity.

In addition, in S213, the configuration parameter may further include the first mapping relationship between the QFI and the data packet type. In details, the network device sends the first mapping relationship to the terminal device, so that the terminal device can determine the types of data packets corresponding to different QFIs according to the first mapping relationship. For example, the network device may configure the QFI that the terminal device can map to DRB1 as 1, 2, and 3. The corresponding data packet types are IP packet, Ethernet packet, and IP packet, respectively. In addition, the network device can also configure the terminal device to perform header compression only on the Ethernet packets in it.

Optionally, the first mapping relationship may be located in an RRC message, that is, the RRC message sent by the network device to the terminal device includes the first mapping relationship.

Optionally, the first mapping relationship may also be predefined, and in S213, the terminal device determines the predefined first mapping relationship, which is not limited in this embodiment of the present application.

As illustrated in FIG. 7, the method 200 further includes: S210, generating a first PDCP PDU, that is, the terminal device generates the first PDCP PDU at the PDCP layer. In details, the terminal device may determine the data packet carried in the DRB according to the configuration information of the network device. Here, any data packet is taken as an example, that is, the first data packet is taken as an example. The terminal device may determine the first QFI of the first data packet and the corresponding type of the first data packet. The terminal device may further determine whether header compression processing needs to be performed on the first data packet, and the corresponding header compression parameter.

FIG. 8 illustrates a schematic diagram of an SDAP PDU. As illustrated in Figure 8, in the SDAP PDU, each row represents an Oct of 8 bits. D/C indicates whether the SDAP PDU is an SDAP Data PDU or an SDAP Control PDU. R means reserved bits. The QFI field identifies the first QFI corresponding to the first data packet in the SDAP PDU. The data field part can be used to carry data. For example, the data field may include the first data packet. Optionally, the first PDCP PDU may further include other fields, which are not limited in this embodiment of the present application.

It should be understood that the terminal device may determine the first QFI of the first data packet, and according to the first mapping relationship, determine that the type of the data packet corresponding to the first QFI is the type of the first data packet. The terminal device is caused to receive the first data packet sent by the higher layer at the PDCP layer and perform header compression processing according to the type of the first data packet, thereby generating the first PDCP PDU. For example, the terminal device may determine whether the first data packet is an IP packet, an Ethernet packet, or an Ethernet packet further carrying an IP header according to the first QFI of the first data packet and the first mapping relationship.

For example, the QFIs that can be mapped to the DRB1 by the terminal device configured by the receiving network device are 1, 2, and 3, and the corresponding data packet types are IP packet, Ethernet packet, and IP packet, respectively. In addition, the network equipment configures the terminal equipment to perform header compression only on the Ethernet packets therein. Therefore, the terminal device distinguishes each data packet in the bearer DRB 1 according to the QFI in the SDAP or according to the analysis of the high-layer packet, and only performs header compression on the Ethernet packet therein, thereby generating the corresponding PDCP PDU.

It should be understood that if the terminal device determines that the receiving end network device needs to distinguish the type of the first data packet, the QFI field in the generated first PDCP PDU can be used as type information to indicate the type of the corresponding first data packet. For example, the terminal device may determine, according to the configuration information sent by the network device, that header compression processing is required for the first data packet, and the network device needs to distinguish the types of the first data packet.

Optionally, if the terminal device determines that it is not necessary to indicate the type of the first data packet, the QFI may not be used as type information. That is, the network device may or may not send the first mapping relationship to the terminal device, and the QFI is also not used to indicate the type of the first data packet, which is not limited in this embodiment of the present application.

As illustrated in FIG. 7, the method 200 further includes: S220, sending the first PDCP PDU, that is, the sending end terminal device sends the first PDCP PDU to the network device. This step corresponds to S220 in the method 200 illustrated in FIG. 2 and is applicable to the description of S220 in the method 200 illustrated in FIG. 2, which is not repeated here for brevity.

As illustrated in FIG. 7, the method 200 further includes: parsing the first PDCP PDU, that is, the network device receives the first PDCP PDU from the terminal device at the PDCP layer. According to the type information included in the first PDCP PDU, that is, according to the first QFI in the first PDCP PDU, the type of the first data packet in the first PDCP PDU can be determined. Then, according to the type of the first data packet, corresponding decoding or parsing processing is performed on the first PDCP PDU to obtain the first data packet.

In details, the network device receives the first PDCP PDU at the PDCP layer, and determines the information of the first QFI carried in the SDAP header in the first PDCP PDU. Then, according to the first mapping relationship between different QFIs and data packet types, the type of the data packet corresponding to the first QFI is determined as the type of the first data packet in the first PDCP PDU. For example, the network device can determine whether the type of the first data packet is an IP packet or an Ethernet packet, so as to perform corresponding decoding and parsing processing on the first PDCP PDU and can submit the first data packet upwards to obtain the first data packet. In details, it is required that the PDCP layer can understand or parse the SDAP header, or the PDCP layer has the ability to understand or parse the SDAP header, so as to obtain the first QFI information in the SDAP header. For example, the PDCP layer may learn the format of the SDAP packet header, and then understand or parse the SDAP packet header to obtain the first QFI information therein.

For example, according to the first mapping relationship sent to the terminal device, the network device determines that the QFIs that can be mapped to DRB1 are 1, 2, and 3, and the corresponding packet types are IP packet, Ethernet packet, and IP packet, and configured with Header compression for Ethernet packet only. Then, the network device determines whether the received first PDCP PDU encapsulates an IP packet or an Ethernet packet according to the QFI in the SDAP and the first mapping relationship. When it is determined to be an Ethernet packet, the network device parses it according to the Ethernet format and performs decompression processing. When it is determined to be an IP packet, the network device parses it according to the IP format.

2. For the downlink data transmission process, that is, the sending end device in the method 200 is a network device, and the receiving end device is a terminal device. FIG. 9 illustrates yet another schematic diagram of a method 200 for transmitting data according to an embodiment of the present application. FIG. 9 is another possible implementation of the method 200 shown in FIG. 2. The terminal device in FIG. 9 corresponds to the receiving end device in FIG. 2, and the network device in FIG. 9 corresponds to the sending end device in FIG. 2.

As illustrated in FIG. 9, the method 200 includes: S214, sending a configuration parameter, that is, the network device sends the configuration parameter to the terminal device. The configuration parameter may be used by the terminal device to parse the first PDCP PDU in S230.

In details, the configuration parameter sent by the network device to the terminal device in S214 may be used by the terminal device to parse the first PDCP PDU in S230. The configuration parameter corresponds to the configuration parameter sent in S212 illustrated in FIG. 6, are applicable to the description in S212 illustrated in FIG. 6, and are not repeated here for brevity.

In addition, in S214, the configuration parameter may further include a first mapping relationship between different QFIs and different data packet types. Alternatively, the first mapping relationship may also be predefined, and the terminal device may determine the predefined first mapping relationship. In details, take the network device sending the first mapping relationship to the terminal device as an example, so that the terminal device can determine the types of data packets corresponding to different QFIs according to the first mapping relationship. For example, the network device may configure the QFIs that the terminal device can map to the DRB1 as 1, 2, and 3, and the corresponding data packet types are IP packet, Ethernet packet, and IP packet, respectively. In addition, the network device can also configure the terminal device to perform header compression only on the Ethernet packets in it.

Optionally, the first mapping relationship may be located in an RRC message, that is, the RRC message sent by the network device to the terminal device includes the first mapping relationship.

As illustrated in FIG. 9, the method 200 further includes: S210, generating a first PDCP PDU, that is, the network device generates the first PDCP PDU at the PDCP layer. In details, the network device determines whether header compression processing needs to be performed on the first data packet, and when compression is required, performs header compression processing on the first data packet.

In details, the network device may determine the first QFI of the first data packet. Then, according to the first mapping relationship between different QFIs and data packet types, it is determined that the data packet type corresponding to the first QFI is the type of the first data packet. and perform header compression processing on the first data packet according to the type of the first data packet. For example, the network device may determine whether the first data packet is an IP packet, an Ethernet packet, or an Ethernet packet further carrying an IP header.

Similar to S210 in the method 200 illustrated in FIG. 7, if the network device determines that the type of the first data packet needs to be distinguished, the QFI field in the generated first PDCP PDU can be used as type information, which is used to indicate the type of the corresponding first data packet.

Optionally, if the network device determines that it is not necessary to indicate the type of the first data packet, the QFI may not be used as type information. That is, the network device may or may not send the first mapping relationship to the terminal device, and the QFI is also not used to indicate the type of the first data packet, which is not limited to this embodiment of the present application.

As illustrated in FIG. 9, the method 200 further includes: S220: sending a first PDCP PDU, that is, the network device at the sending end sends the first PDCP PDU to the terminal device. This step corresponds to S220 in the method 200 illustrated in FIG. 2 and is applicable to the description of S220 in the method 200 illustrated in FIG. 2, which is not repeated here for brevity.

As illustrated in FIG. 9, the method 200 further includes: parsing the first PDCP PDU, that is, the terminal device receives the first PDCP PDU from the network device at the PDCP layer. According to the type information included in the first PDCP PDU, that is, according to the first QFI in the first PDCP PDU, the type of the first data packet in the first PDCP PDU can be determined. Then, according to the type of the first data packet, corresponding decoding or parsing processing is performed on the first PDCP PDU to obtain the first data packet. The terminal device may perform corresponding decompression or decoding or parsing processing on the first PDCP PDU according to the compression configuration parameter sent by the network device to obtain the first data packet.

In details, the terminal device receives the first PDCP PDU at the PDCP layer and determines the information of the first QFI carried in the SDAP header in the first PDCP PDU. Then, according to the first mapping relationship between different QFIs and data packet types, the type of the data packet corresponding to the first QFI is determined as the type of the first data packet in the first PDCP PDU. For example, the terminal device may determine whether the type of the first data packet is an IP packet or an Ethernet packet so as to perform corresponding decoding and parsing processing on the first PDCP PDU and can submit the first data packet upwards to obtain the first data packet.

For example, according to the first mapping relationship sent by the network device, the terminal device determines that the QFIs that can be mapped to DRB1 are 1, 2, and 3, and the corresponding packet types are IP packet, Ethernet packet, and IP packet, and configured with only Header compression for Ethernet packets. Then, the terminal device determines whether the received first PDCP PDU encapsulates an IP packet or an Ethernet packet according to the QFI in the SDAP and the first mapping relationship. When it is determined to be an Ethernet packet, the terminal device parses it according to the Ethernet format and decompresses it. When it is determined to be an IP packet, the terminal device parses it according to the IP format.

Optionally, as a third embodiment, the type information may also multiplex other fields in the first PDCP PDU. For example, the type information may also be first profile information of the first data packet. In details, the method 200 may further include: the sending end device determining, according to the second mapping relationship between the profile information and the data packet type, that the data packet type corresponding to the first profile information is the type of the first data packet. The profile information in this embodiment of the present application may include a profile identifier. For example, profile ID, or it can also be other profile information. For convenience of description, the following descriptions are given by taking the profile ID as an example.

Optionally, as illustrated in FIG. 4 and FIG. 5, the first profile identifier may be located in the data field of the first PDCP PDU.

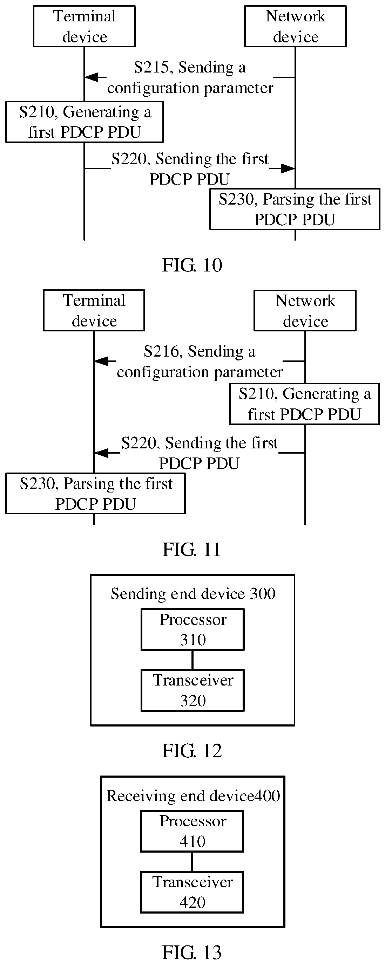

The following will introduce the uplink and downlink transmission processes respectively with reference to specific embodiments.
1. For the uplink data transmission process, that is, the sending end device in the method 200 is a terminal device, and the receiving end device is a network device. FIG. 10 illustrates yet another schematic diagram of a method 200 for transmitting data according to an embodiment of the present application. FIG. 10 is yet another possible implementation of the method 200 illustrated in FIG. 2. The terminal device in FIG. 10 corresponds to the sending end device in FIG. 2, and the network device in FIG. 10 corresponds to the receiving end device in FIG. 2.

As illustrated in FIG. 10, the method 200 includes: S215, sending a configuration parameter, that is, the network device may send the configuration parameter to the terminal device.

In details, the configuration parameter sent by the network device to the terminal device in S215 may be used by the terminal device to generate the first PDCP PDU in S210. The configuration parameter corresponds to the configuration parameters sent in S211 illustrated in FIG. 3 and are applicable to the description in S211 illustrated in FIG. 3, which are not repeated here for brevity.

In addition, in S215, the configuration parameter may further include a second mapping relationship between the profile ID and the data packet type. Alternatively, the second mapping relationship may also be predefined. The terminal device may determine the predefined second mapping relationship. In details, take the network device sending the second mapping relationship to the terminal device as an example. In the second mapping relationship, different data packet types correspond to different profile IDs, thereby implicitly distinguishing different data packet types. This is convenient for the terminal device to determine the types of data packets corresponding to different profile IDs according to the second mapping relationship. For example, the network device may be configured with profile IDs of 1 and 2 for the terminal device IP packet and the Ethernet packet, respectively. In addition, the network device can also configure the terminal device to perform header compression only on the Ethernet packets in it.

Optionally, the second mapping relationship may be located in an RRC message, that is, the RRC message sent by the network device to the terminal device includes the second mapping relationship.

As illustrated in FIG. 10, the method 200 further includes: S210, generating a first PDCP PDU, that is, the terminal device generates the first PDCP PDU at the PDCP layer. In details, the terminal device may determine the data packet carried in the DRB according to the configuration information of the network device. Here, any data packet is taken as an example, that is, the first data packet is taken as an example. The terminal device may determine the first QFI of the first data packet and the corresponding DRB. The terminal device may also determine the type of the first data packet according to the second mapping relationship according to the first profile ID of the first data packet configured by the network device. The terminal device may further determine whether header compression processing needs to be performed on the first data packet, and the corresponding header compression parameters.

It should be understood that the terminal device may determine the first profile ID of the first data packet. According to the second mapping relationship, it is determined that the type of the data packet corresponding to the first profile ID is the type of the first data packet. The terminal device is caused to receive the first data packet sent by the upper layer at the PDCP layer. The type of the first data packet can be determined according to the first profile ID and the second mapping relationship and/or by parsing the format of the first data packet. According to the type of the first data packet, the header compression process is performed, and then the first PDCP PDU is generated. The generated first PDCP PDU includes the first profile ID. For example, the terminal device may parse the first data packet and/or determine whether the first data packet is an IP packet, an Ethernet packet, or an Ethernet packet further carrying an IP header according to the first profile ID and the second mapping relationship of the first data packet.

For example, the network device may be configured with profile IDs of 1 and 2 for the terminal device IP packet and the Ethernet packet, respectively. In addition, the network device can also configure the terminal device to perform header compression only on the Ethernet packets in it. Therefore, the terminal device distinguishes each data packet in the bearer DRB 1 according to the profile ID or according to the analysis of the high-layer packet, and only performs header compression on the Ethernet packet therein, so as to generate the corresponding PDCP PDU. The IP packet is encapsulated in PDCP PDU1, and the profile ID carried is 1. The Ethernet packet is encapsulated in PDCP PDU2, and the profile ID carried is 2.

It should be understood that if the terminal device determines that the network device at the receiving end needs to distinguish the type of the first data packet, the generated first PDCP PDU includes a profile ID field. The profile ID field may be used as type information to indicate the type of the corresponding first data packet. For example, the terminal device may determine, according to the configuration information sent by the network device, that header compression processing is required for the first data packet. Then the network device needs to distinguish the type of the first data packet.

Optionally, if the terminal device determines that the type of the first data packet does not need to be indicated, the profile ID field may not be included in the first PDCP PDU generated by the terminal device, or the profile ID resource may be included but not used as type information. That is, the network device does not need to send the second mapping relationship to the terminal device. The network device also does not need to assign different profile IDs to different types of data packets. The embodiments of the present application are not limited to this.

As illustrated in FIG. 10, the method 200 further includes: S220, sending a first PDCP PDU, that is, the sending end terminal device sends the first PDCP PDU to the network device. This step corresponds to S220 in the method 200 illustrated in FIG. 2 and is applicable to the description of S220 in the method 200 illustrated in FIG. 2, which is not repeated here for brevity.

As illustrated in FIG. 10, the method 200 further includes: parsing the first PDCP PDU, that is, the network device receives the first PDCP PDU from the terminal device at the PDCP layer. According to the type information included in the first PDCP PDU, that is, according to the first profile ID in the first PDCP PDU, the type of the first data packet in the first PDCP PDU can be determined. Then, according to the type of the first data packet, corresponding decoding or parsing processing is performed on the first PDCP PDU to obtain the first data packet.

In details, the network device receives the first PDCP PDU at the PDCP layer and determines the first profile ID in the first PDCP PDU. Then, according to the second mapping relationship between different profile IDs and data packet types, the type of the data packet corresponding to the first profile ID is determined as the type of the first data packet in the first PDCP PDU. For example, the network device may determine whether the type of the first data packet is an IP packet or an Ethernet packet. This facilitates the corresponding decoding and parsing processing of the first PDCP PDU, and the processing that can be submitted upwards, thereby obtaining the first data packet.

For example, the network device configures the profile IDs of the terminal device IP packet and the Ethernet packet to be 1 and 2, respectively. In addition, the network device can also configure the terminal device to perform header compression only on the Ethernet packets in it. Then, the network device determines whether the received first PDCP PDU encapsulates an IP packet or an Ethernet packet according to the first profile ID in the first PDCP PDU and the second mapping relationship. For example, if the profile ID is 1, the network device determines that the first data packet is an IP packet and parses it according to the IP format. If the profile is 2, the network device determines that the first data packet is an Ethernet packet, parses it according to the Ethernet format, and performs decompression processing.

2. For the downlink data transmission process, that is, the sending end device in the method 200 is a network device, and the receiving end device is a terminal device. FIG. 11 illustrates yet another schematic diagram of a method 200 for transmitting data according to an embodiment of the present application. FIG. 11 is another possible implementation of the method 200 illustrated in FIG. 2. The terminal device in FIG. 11 corresponds to the receiving end device in FIG. 2, and the network device in FIG. 11 corresponds to the sending end device in FIG. 2.

As illustrated in FIG. 11, the method 200 includes: S216, sending a configuration parameter, that is, the network device sends the configuration parameter to the terminal device. The configuration parameter may be used by the terminal device to parse the first PDCP PDU in S230.

Specifically, the configuration parameter sent by the network device to the terminal device in S216 may be used by the terminal device to parse the first PDCP PDU in S230. The configuration parameter corresponds to the configuration parameter sent in S212 illustrated in FIG. 6 and are applicable to the description in S212 illustrated in FIG. 6, which are not repeated here for brevity.

In addition, in S216, the configuration parameter may further include a second mapping relationship between different profile IDs and different data packet types. Alternatively, the second mapping relationship may also be predefined. The terminal device may determine the predefined second mapping relationship. In details, take the network device sending the second mapping relationship to the terminal device as an example, so that the terminal device can determine the types of data packets corresponding to different profile IDs according to the second mapping relationship. For example, the network device may be configured with profile IDs of 1 and 2 for the terminal device IP packet and the Ethernet packet, respectively. In addition, the network device can also configure the terminal device to perform header compression only on the Ethernet packets in it.

Optionally, the second mapping relationship may be located in an RRC message, that is, the RRC message sent by the network device to the terminal device includes the first mapping relationship.

As illustrated in FIG. 11, the method 200 further includes: S210, generating a first PDCP PDU, that is, the network device generates the first PDCP PDU at the PDCP layer. In details, the network device determines whether header compression processing needs to be performed on the first data packet, and when compression is required, performs header compression processing on the first data packet.

In details, the network device may determine the first profile ID of the first data packet. Then, according to the analysis of the first data packet and/or the second mapping relationship between different profile IDs and data packet types, the network device determines that the data packet type corresponding to the first profile ID is the type of the first data packet. The network device performs header compression processing on the first data packet according to the type of the first data packet. For example, the network device may determine whether the first data packet is an IP packet, an Ethernet packet, or an Ethernet packet further carrying an IP header.

Similar to S210 in the method 200 illustrated in FIG. 10, if the network device determines that the type of the first data packet needs to be distinguished, the generated first PDCP PDU includes a profile ID field. The profile ID field may be used as type information to indicate the type of the corresponding first data packet.

Optionally, if the network device determines that it is not necessary to indicate the type of the first data packet, the first PDCP PDU generated by the terminal device may not include the profile ID field, or may include the profile ID resource without type information. That is, the network device does not need to send the second mapping relationship to the terminal device, nor does the network device need to allocate different profile IDs for different types of data packets. The embodiments of the present application are not limited to this.

As illustrated in FIG. 11, the method 200 further includes: S220, sending a first PDCP PDU, that is, the sending end network device sends the first PDCP PDU to the terminal device. This step corresponds to S220 in the method 200 illustrated in FIG. 2 and is applicable to the description of S220 in the method 200 illustrated in FIG. 2, which is not repeated here for brevity.

As illustrated in FIG. 11, the method 200 further includes: parsing the first PDCP PDU, that is, the terminal device receives the first PDCP PDU from the network device at the PDCP layer. According to the type information included in the first PDCP PDU, that is, according to the first profile ID in the first PDCP PDU, the type of the first data packet in the first PDCP PDU can be determined. Then, according to the type of the first data packet, corresponding decoding or parsing processing is performed on the first PDCP PDU to obtain the first data packet. The terminal device may perform corresponding decoding or parsing processing on the first PDCP PDU according to the compression configuration parameter sent by the network device to obtain the first data packet.

Specifically, the terminal device receives the first PDCP PDU at the PDCP layer and determines the first profile ID in the first PDCP PDU. Then, according to the second mapping relationship between different profile IDs and data packet types, the type of the data packet corresponding to the first profile ID is determined as the type of the first data packet in the first PDCP PDU. For example, the terminal device may determine whether the type of the first data packet is an IP packet or an Ethernet packet. This facilitates the corresponding decoding and parsing processing of the first PDCP PDU, and the processing that can be submitted upwards, thereby obtaining the first data packet.

For example, according to the second mapping relationship sent by the network device, the network device configures the profile IDs of the terminal device IP packet and the Ethernet packet to be 1 and 2, respectively. In addition, the network device can also configure the terminal device to perform header compression only on the Ethernet packets in it. Then, the terminal device determines whether the received first PDCP PDU encapsulates an IP packet or an Ethernet packet according to the first profile ID in the first PDCP PDU and the second mapping relationship. For example, if the profile ID is 1, the terminal device determines that the first data packet is an IP packet and parses it according to the IP format. If the profile is 2, the terminal device determines that the first data packet is an Ethernet packet, parses it according to the Ethernet format, and performs decompression processing.

Therefore, in the method for transmitting data according to the embodiment of the present application, the type of the data packet encapsulated in the PDCP PDU can be determined by using the type information included in the PDCP PDU. Especially in the case of mapping IP packet and Ethernet packet in the same bearer, the receiving end device can distinguish the received data packets. This avoids the failure of decoding and decompression at the decompression end, thereby avoiding unnecessary data transmission errors and retransmissions, and also avoids serious problems such as waste of air interface resources and network disconnection of the terminal device.

It should be understood that, in various embodiments of the present application, the size of the sequence numbers of the above processes does not mean the order of execution. The execution sequence of each process should be determined by its function and internal logic and should not constitute any limitation on the implementation process of the embodiments of the present application.

A method for transmitting data according to an embodiment of the present application is described in detail above with reference to FIG. 1 to FIG. 11. The sending end device and the receiving end device according to the embodiments of the present application will be described below with reference to FIG. 12 to FIG. 16.

As illustrated in FIG. 12, a sending end device 300 according to the embodiment of the present application includes: a processor 310 and a transceiver 320. In details, the processor 310 is configured to: generate a first PDCP PDU, wherein the first PDCP PDU comprises type information, and the type information is used to indicate that a type of a first data packet in the first PDCP PDU is one of an Ethernet data packet, an IP data packet, and an Ethernet data packet comprising an IP packet header.

Optionally, as an embodiment, the processor 310 is configured to: perform header compression processing on the first data packet according to the type of the first data packet, so as to generate the first PDCP PDU.

Optionally, as an embodiment, the first data packet and the second data packet are mapped to a same DRB, and the type of the first data packet is different from a type of the second data packet.

Optionally, as an embodiment, bits occupied by the type information are reserved bits of the first PDCP PDU.

Optionally, as an embodiment, the processor 310 is configured to perform at least one of the following steps: if the type of the first data packet is the Ethernet data packet, determining that a value of the bits occupied by the type information is a first value; if the type of the first data packet is the IP data packet, determining that the value of the bits occupied by the type information is a second value; and if the type of the first data packet is the Ethernet data packet comprising the IP packet header, determining that the value of the bits occupied by the type information is a third value.

Optionally, as an embodiment, the type information is a first quality of service flow identifier (QFI) of the first data packet, the processor 310 is further configured to: determine, according to a first mapping relationship between a QFI and a data packet type, that the data packet type corresponding to the first QFI is the type of the first data packet.

Optionally, as an embodiment, the first PDCP PDU comprises a data field, the data field comprises a SDAP PDU, and the SDAP PDU comprises the first QFI.

Optionally, as an embodiment, the sending end device 300 is a network device, and the transceiver 320 is configured to: send the first mapping relationship to a terminal device.

Optionally, as an embodiment, the sending end device 300 is a terminal device, and the transceiver 320 is configured to: receive the first mapping relationship sent by the network device.

Optionally, as an embodiment, the first mapping relationship is located in an RRC message.

Optionally, as an embodiment, the type information is a first configuration file identifier of the first data packet, and the processor 310 is configured to: determine, according to a second mapping relationship between a configuration file identifier and a data packet type, that a data packet type corresponding to the first configuration file identifier is the type of the first data packet.

Optionally, as an embodiment, the first configuration file identifier is located in a data field of the first PDCP PDU.

Optionally, as an embodiment, the sending end device 300 is a network device, and the transceiver 320 is configured to send the second mapping relationship to the terminal device.

Optionally, as an embodiment, the sending end device 300 is a terminal device, and the transceiver 320 is configured to receive the second mapping relationship sent by the network device.

Optionally, as an embodiment, the second mapping relationship is located in an RRC message.

Optionally, as an embodiment, the sending end device 300 is a network device, and the transceiver 320 is configured to send a compression configuration parameter to the terminal device, where the compression configuration parameter is used by the terminal device to perform decompression processing on the first data packet.

Optionally, as an embodiment, the sending end device 300 is a terminal device, and the transceiver 320 is configured to configured to receive a compression configuration parameter sent by the network device; the processor 310 is configured to: perform header compression processing on the first data packet according to the compression configuration parameter and the type of the first data packet.

Optionally, as an embodiment, the compression configuration parameter is located in an RRC message.

It should be understood that the above and other operations and/or functions of each unit in the transmitting end device 300 in this embodiment of the present application are respectively to implement the corresponding processes of the transmitting end device in each method in FIG. 1 to FIG. 11. For brevity, details are not repeated here.

Therefore, in the sending end device of this embodiment of the present application, type information can be set in the PDCP PDU. This facilitates the receiving end device to determine the type of data packet encapsulated in the PDCP PDU. Especially in the case of mapping IP packet and Ethernet packet in the same bearer, the receiving end device can distinguish the received data packets. This avoids the failure of decoding and decompression at the decompression end, thereby avoiding unnecessary data transmission errors and retransmissions, and also avoids serious problems such as waste of air interface resources and network disconnection of the terminal device.

As illustrated in FIG. 13, a receiving end device 400 according to the embodiment of the present application includes: a processor 410 and a transceiver 420. In details, the transceiver 420 is configured to: receive a first PDCP PDU at a PDCP layer, wherein the first PDCP PDU comprises type information; the processor 410 is configured to: determine, according to the type information, that a type of a first data packet in the first PDCP PDU is one of an Ethernet data packet, an IP data packet, and an Ethernet data packet comprising an IP packet header.

Optionally, as an embodiment, the processor 410 is further configured to: parse or decompress the first PDCP PDU according to the type of the first data packet, so as to obtain the first data packet.

Optionally, as an embodiment, the first data packet and the second data packet are mapped to a same DRB, and the type of the first data packet is different from a type of the second data packet.

Optionally, as an embodiment, bits occupied by the type information are reserved bits of the first PDCP PDU.

Optionally, as an embodiment, the processor 410 is configured to perform at least one of the following steps: if the type of the first data packet is the Ethernet data packet, determining that a value of the bits occupied by the type information is a first value; if the type of the first data packet is the IP data packet, determining that the value of the bits occupied by the type information is a second value; and if the type of the first data packet is the Ethernet data packet comprising the IP packet header, determining that the value of the bits occupied by the type information is a third value.

Optionally, as an embodiment, the type information is a first QFI of the first data packet, the processor 410 is configured to determine, according to a first mapping relationship between a QFI and a data packet type, that the data packet type corresponding to the first QFI is the type of the first data packet.

Optionally, as an embodiment, the processor 410 is configured to: acquire the first QFI in a service data adaptation protocol (SDAP) PDU in a data field of the first PDCP PDU at the PDCP layer.

Optionally, as an embodiment, the receiving end device 400 is a terminal device, the transceiver 420 is further configured to: receive the first mapping relationship sent by the network device.

Optionally, as an embodiment, the receiving end device 400 is a network device, the transceiver 420 is further configured to: send the first mapping relationship to the terminal device, wherein the first mapping relationship is used by the terminal device to determine the first PDCP PDU.

Optionally, as an embodiment, the first mapping relationship is located in an RRC message.

Optionally, as an embodiment, the type information is a first configuration file identifier of the first data packet, the processor 410 is configured to: determine, according to a second mapping relationship between a configuration file identifier and a data packet type, that the data packet type corresponding to the first configuration file identifier is the type of the first data packet.

Optionally, as an embodiment, the transceiver 420 is further configured to: acquire the first configuration file identifier in a data field of the first PDCP PDU at the PDCP layer.

Optionally, as an embodiment, the receiving end device 400 is a terminal device, the transceiver 420 is further configured to: receive the second mapping relationship sent by the network device.

Optionally, as an embodiment, the receiving end device 400 is a network device, the transceiver 420 is further configured to: send the second mapping relationship to the terminal device, wherein the second mapping relationship is used by the terminal device to determine the first PDCP PDU.

Optionally, as an embodiment, the second mapping relationship is located in an RRC message.

Optionally, as an embodiment, the receiving end device 400 is a terminal device, the transceiver 420 is further configured to: receive a compression configuration parameter sent by the network device; the processor 410 is further configured to: decompress the first PDCP PDU according to the compression configuration parameter and the type of the first data packet.

Optionally, as an embodiment, the receiving end device 400 is a network device, the transceiver 420 is further configured to: send a compression configuration parameter to the terminal device, wherein the compression configuration parameter is used by the terminal device to perform header compression processing on the first data.

Optionally, as an embodiment, the compression configuration parameter is located in an RRC message.

It should be understood that the above and other operations and/or functions of the respective units in the receiving end device 400 in this embodiment of the present application are respectively to implement the corresponding processes of the receiving end device in each method in FIG. 1 to FIG. 11. For brevity, details are not repeated here.

Therefore, the receiving end device according to the embodiment of the present application can determine the type of the data packet encapsulated in the PDCP PDU according to the type information included in the received PDCP PDU. Especially in the case of mapping IP packet and Ethernet packet in the same bearer, the receiving end device can distinguish the received data packets. This avoids the failure of decoding and decompression at the decompression end, thereby avoiding unnecessary data transmission errors and retransmissions, and also avoids serious problems such as waste of air interface resources and network disconnection of the terminal device.

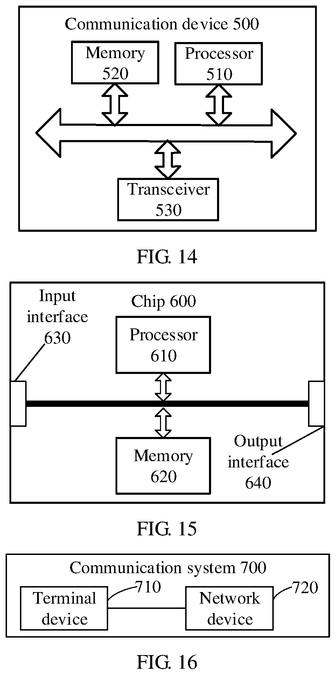

FIG. 14 is a schematic structural diagram of a communication device 500 according to an implementation of the present disclosure. The communication device 500 illustrated in FIG. 6 includes a processor 510. The processor 510 may call a computer program from a memory and run the computer program, to implement the method in the implementations of the present disclosure.

Optionally, as illustrated in FIG. 14, the communication device 500 may further include a memory 520. The processor 510 may call the computer program from the memory 620 and run the computer program, to implement the method in the implementations of the present disclosure.

The memory 520 may be a component independent of the processor 510 or may be integrated into the processor 510.

Optionally, as illustrated in FIG. 14, the communication device 500 may further include a transceiver 530. The processor 510 may control the transceiver 530 to communicate with another device, and in details, the transceiver 530 may send information or data to another device, or receive information or data sent by another device.

The transceiver 530 may include a transmitter and a receiver. The transceiver 530 may further include an antenna. There may be one or more antennas.

Optionally, the communication device 500 may be the network device in the implementations of the present disclosure, and the communication device 500 can implement corresponding procedures implemented by the network device in various methods in the implementations of the present disclosure. For brevity, details are not described herein again.

Optionally, the communication device 500 may be the mobile terminal/the terminal device in the implementations of the present disclosure, and the communication device 500 can implement corresponding procedures implemented by the mobile terminal/the terminal device in various methods in the implementations of the present disclosure. For brevity, details are not described herein again.

FIG. 15 is a schematic structural diagram of a chip 600 according to an implementation of the present disclosure. The chip 600 shown in FIG. 15 includes a processor 610. The processor 610 may invoke a computer program from a memory and run the computer program, to implement the method in the implementations of the present disclosure.

Optionally, as shown in FIG. 15, the chip 600 may further include a memory 620. The processor 610 may invoke the computer program from the memory 620 and run the computer program, to implement the method in the implementations of the present disclosure.

The memory 620 may be a component independent of the processor 610 or may be integrated into the processor 610.

Optionally, the chip 600 may further include an input interface 630. The processor 610 may control the input interface 630 to communicate with another device or chip, and specifically, the input interface 630 may obtain information or data sent by another device or chip.

Optionally, the chip 600 may further include an output interface 640. The processor 610 may control the output interface 640 to communicate with another device or chip, and specifically, the output interface 640 may output information or data to another device or chip.

Optionally, the chip may be applied to the network device in the implementations of the present disclosure, and the chip can implement corresponding procedures implemented by the network device in various methods in the implementations of the present disclosure. For brevity, details are not described herein again.

Optionally, the chip may be applied to the terminal device in the implementations of the present disclosure, and the chip can implement corresponding procedures implemented by the terminal device in various methods in the implementations of the present disclosure. For brevity, details are not described herein again.

It should be noted that, the chip mentioned in the implementations of the present disclosure may also be referred to as a system-level chip, a system chip, a chip system, a system on chip, or the like.

FIG. 16 is a schematic structural diagram of a communication device 700 according to an implementation of the present disclosure. The communication device 800 shown in FIG. 16 includes a terminal device 710 and a network device 720.

The terminal device 710 can implement corresponding functions implemented by the terminal device in the foregoing method and the network device 720 can implement corresponding functions implemented by the network device in the foregoing method. For brevity, details are not described herein again.

It should be understood that, the processor of the implementations of the present disclosure may be an integrated circuit chip, has a signal processing capability, the steps of the foregoing method implementation may be implemented by using a hardware integrated logic circuit in the processor and/or implemented by using an instruction in a software form. The foregoing processor may be a general purpose processor, a digital signal processor (DSP), a field programmable gate array (FPGA), an application specific integrated circuit (ASIC) or another programmable logic device, a transistor logic device, or a discrete hardware component. Various methods, acts, and logical blocks disclosed in the implementations of the present disclosure can be implemented or executed. The foregoing general purpose processor may be a microprocessor, or may be any conventional processor, or the like. Steps of the methods disclosed with reference to the implementations of the present disclosure may be directly executed and completed by means of a hardware decoding processor, or may be executed and completed by using a combination of hardware and software modules in the decoding processor. The software module may be located in a mature storage medium in the field, such as a random access memory, a flash memory, a read-only memory, a programmable read-only memory, an electrically-erasable programmable memory, or a register. The storage medium is located in the memory, and the processor reads information in the memory and completes the steps in the foregoing method implementations in combination with hardware of the processor.

It should be understood that, the memory in the implementations of the present disclosure may be a volatile memory or a non-volatile memory, or may include both a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM) and is used as an external cache. By way of examples but of no limitation, many forms of RAM are available, for example, a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synclink dynamic random access memory (SLDRAM), and a direct rambus random access memory (DRRAM). It should be noted that, the memory of the system and the method described in this implementation of the present disclosure is intended to include but is not limited to these memories and any other suitable type of memory.

It should be understood that, the memory is an example but is not intended for limitation. For example, the memory in the implementations of the present disclosure may alternatively be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), and the like. That is, the memory described in this implementation of the present disclosure is intended to include but is not limited to these memories and any other suitable type of memory.

An implementation of the present disclosure further provides a computer readable storage medium. The computer readable storage medium is configured to store a computer program.

Optionally, the computer readable storage medium may be applied to the network device in the implementations of the present disclosure, and the computer program enables a computer to execute a corresponding procedure implemented by the network device in the methods of the implementations of the present disclosure. For brevity, details are not described herein again.

Optionally, the computer readable storage medium may be applied to the terminal device in the implementations of the present disclosure, and the computer program enables the computer to execute a corresponding procedure implemented by the terminal device in the methods of the implementations of the present disclosure. For brevity, details are not described herein again.

The present disclosure further provides a computer program product. The computer program product includes a computer program instruction.

Optionally, the computer program product may be applied to the network device in the implementations of the present disclosure, and the computer program instruction enables the computer to execute a corresponding procedure implemented by the network device in the methods of the implementations of the present disclosure. For brevity, details are not described herein again.

Optionally, the computer program product may be applied to the terminal device in the implementations of the present disclosure, and the computer program instruction enables the computer to execute a corresponding procedure implemented by the terminal device in the methods of the implementations of the present disclosure. For brevity, details are not described herein again.

The present disclosure further provides a computer program.

Optionally, the computer program may be applied to the network device in the implementations of the present disclosure, and when run on a computer, the computer program instruction enables the computer to execute a corresponding procedure implemented by the network device in the methods of the implementations of the present disclosure. For brevity, details are not described herein again.

Optionally, the computer program may be applied to the terminal device in the implementations of the present disclosure, and when run on a computer, the computer program instruction enables the computer to execute a corresponding procedure implemented by the terminal device in the methods of the implementations of the present disclosure. For brevity, details are not described herein again.

A person of ordinary skill in the art may be aware that, in combination with the examples described in the implementations disclosed in this specification, units and algorithm steps may be implemented by using electronic hardware or a combination of computer software and electronic hardware. Whether these functions are executed by means of hardware or software depends on specific applications and design constraints of the technical solutions. A person skilled in the art may use different methods to implement the described functions for each particular application, but it should not be considered that the implementation goes beyond the scope of the present disclosure.

A person skilled in the art may clearly understand that, for simple and clear description, for specific work processes of the foregoing described system, apparatus, and unit, reference may be made to corresponding process in the foregoing method implementations, and details are not described herein again.

In the several implementations provided in the present disclosure, it should be understood that the disclosed system, apparatus, and method may be implemented in other manners. For example, the apparatus implementations described above are merely examples. For example, the unit division is merely logical function division, and there may be other division manners in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and the parts displayed as units may or may not be physical units, may be located in one position, or may be distributed on multiple network units. Some of or all of the units may be selected according to actual needs to achieve the objectives of the solutions of the implementations.

In addition, functional units in the implementations of the present disclosure may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of the present disclosure essentially, or the part contributing to the prior art, or some of the technical solutions may be implemented in a form of a software product. The software product is stored in a storage medium and includes several instructions for instructing a computer device (which may be a personal computer, a server, or a network device) to perform all or some of the steps of the methods described in the implementations of the present disclosure. The foregoing storage medium includes: any medium that can store program code, such as a USB flash drive, a removable hard disk, a read-only memory (ROM), a random access memory (RAM), a magnetic disk, or an optical disc.

Described above are merely specific implementations of the present disclosure, but the protection scope of the present disclosure is not limited thereto. Changes or replacements readily figured out by any person skilled in the art within the technical scope disclosed in the present disclosure shall be covered by the protection scope of the present disclosure. Therefore, the protection scope of the present disclosure shall be subject to the protection scope of the claims.

## Claims

1. A method (200) for transmitting data, comprising:
a sending end device (300) generating a first packet data convergence protocol, PDCP, protocol data unit, PDU, (S210);
wherein the first PDCP PDU comprises type information, and the type information is used to indicate that a type of a first data packet in the first PDCP PDU is one of an Ethernet data packet, an Internet protocol, IP, data packet, and an Ethernet data packet comprising an IP packet header;
**characterized in that** the first data packet and a second data packet are mapped to a same data radio bearer, DRB, the type of the first data packet is different from a type of the second data packet, the type information is a first configuration file identifier of the first data packet, and the method (200) further comprises the sending end device (300) determining, according to a second mapping relationship between a configuration file identifier and a data packet type, that a data packet type corresponding to the first configuration file identifier is the type of the first data packet.

2. The method (200) according to claim 1, **characterized in that** the sending end device (300) generating the PDCP PDU comprises:
the sending end device (300) performing header compression processing on the first data packet according to the type of the first data packet, so as to generate the first PDCP PDU.

3. The method (200) according to claim 1 or 2, **characterized in that** the first configuration file identifier is located in a data field of the first PDCP PDU.

4. The method (200) according to claim 3, **characterized in that** the sending end device (300) is a terminal device,
the method (200) further comprises:
the terminal device receiving the second mapping relationship sent by a network device.

5. The method (200) according to claim 4, **characterized in that** the second mapping relationship is located in an radio resource control, RRC message.

6. The method (200) according to any one of claims 1 to 5, **characterized in that** bits occupied by the type information in the first PDCP PDU are reserved bits of the first PDCP PDU.

7. The method (200) according to claim 6, **characterized by** further comprising at least one of the following steps: if the type of the first data packet is the Ethernet data packet, the sending end device (300) determines that a value of the bits occupied by the type information is a first value; if the type of the first data packet is the IP data packet, the sending end device (300) determines that the value of the bits occupied by the type information is a second value; and if the type of the first data packet is the Ethernet data packet comprising the IP packet header, the sending end device determines (300) that the value of the bits occupied by the type information is a third value.

8. The method (200) according to any one of claims 1 to 7, **characterized in that** a number of bits occupied by the type information is 2 bits to indicate the Ethernet data packet, the IP data packet, and the Ethernet data packet comprising the IP packet header, respectively.

9. A sending end device (300), comprising:
a processor (310) configured to generate a first packet data convergence protocol, PDCP, protocol data unit, PDU;
wherein the first PDCP PDU comprises type information, and the type information is used to indicate that a type of a first data packet in the first PDCP PDU is one of an Ethernet data packet, an Internet protocol, IP, data packet, and an Ethernet data packet comprising an IP packet header;
**characterized in that** the first data packet and a second data packet are mapped to a same data radio bearer, DRB, the type of the first data packet is different from a type of the second data packet, the type information is a first configuration file identifier of the first data packet, and the processor (310) is configured to determine, according to a second mapping relationship between a configuration file identifier and a data packet type, that a data packet type corresponding to the first configuration file identifier is the type of the first data packet.

10. The sending end device (300) according to claim 9, **characterized in that** the processor (310) is configured to:
perform header compression processing on the first data packet according to the type of the first data packet, so as to generate the first PDCP PDU.

11. The sending end device (300) according to claim 9 or 10, **characterized in that** the first configuration file identifier is located in a data field of the first PDCP PDU.

12. The sending end device (300) according to claim 11, **characterized in that** the sending end device (300) is a terminal device,
the terminal device further comprises:
a transceiver (320) configured to receive the second mapping relationship sent by a network device.

13. The sending end device (300) according to claim 12, **characterized in that** the second mapping relationship is located in an RRC message.

14. The sending end device (300) according to any one of claims 9 to 13, **characterized in that** bits occupied by the type information in the first PDCP PDU are reserved bits of the first PDCP PDU.

15. The sending end device (300) according to any one of claims 9 to 14, **characterized in that** a number of bits occupied by the type information is 2 bits to indicate the Ethernet data packet, the IP data packet, and the Ethernet data packet comprising the IP packet header, respectively.

## Patentansprüche

1. Verfahren (200) zum Übertragen von Daten, Folgendes umfassend:
ein sendeseitiges Gerät (300), das eine erste Protokolldateneinheit, PDU, eines PDCP, Packet Data Convergence Protocol, erzeugt (S210),
wobei die erste PDCP-PDU Informationen zur Art umfasst und die Informationen zur Art verwendet werden, um anzugeben, dass eine Art eines ersten Datenpakets in der ersten PDCP-PDU eines von einem Ethernet-Datenpaket, einem Internetprotokoll-, IP-, Datenpaket und einem Ethernet-Datenpaket, das einen IP-Paket-Header umfasst, ist,
**dadurch gekennzeichnet, dass** das erste Datenpaket und ein zweites Datenpaket auf den gleichen Datenfunkträger, DRB, abgebildet werden, wobei sich die Art des ersten Datenpakets von einer Art des zweiten Datenpakets unterscheidet, die Informationen zur Art eine erste Konfigurationsdateikennung des ersten Datenpakets sind und das Verfahren (200) ferner umfasst, dass das sendeseitige Gerät (300) gemäß einem zweiten Abbildungsverhältnis zwischen einer Konfigurationsdateikennung und einer Art des Datenpakets bestimmt, dass eine Art des Datenpakets, die der ersten Konfigurationsdateikennung entspricht, die Art des ersten Datenpakets ist.

2. Verfahren (200) nach Anspruch 1, **dadurch gekennzeichnet, dass** das Erzeugen der PDCP-PDU durch das sendeseitige Gerät (300) Folgendes umfasst:
Durchführen einer Header-Komprimierungsverarbeitung an dem ersten Datenpaket durch das sendeseitige Gerät (300) gemäß der Art des ersten Datenpakets, so dass die erste PDCP-PDU erzeugt wird.

3. Verfahren (200) nach Anspruch 1 oder 2, **dadurch gekennzeichnet, dass** sich die erste Konfigurationsdateikennung in einem Datenfeld der ersten PDCP-PDU befindet.

4. Verfahren (200) nach Anspruch 3, **dadurch gekennzeichnet, dass** das sendeseitige Gerät (300) ein Endgerät ist,
wobei das Verfahren (200) ferner Folgendes umfasst:
Empfangen des zweiten Abbildungsverhältnisses, das von einem Netzwerkgerät gesendet wird, durch das Endgerät.

5. Verfahren (200) nach Anspruch 4, **dadurch gekennzeichnet, dass** sich das zweite Abbildungsverhältnis in einer Funkressourcensteuerungs-, RRC-, Nachricht befindet.

6. Verfahren (200) nach einem der Ansprüche 1 bis 5, **dadurch gekennzeichnet, dass** Bits, die von den Informationen zur Art in der ersten PDCP-PDU besetzt sind, reservierte Bits der ersten PDCP-PDU sind.

7. Verfahren (200) nach Anspruch 6, **dadurch gekennzeichnet, dass** es ferner mindestens einen der folgenden Schritte umfasst:
wenn die Art des ersten Datenpakets das Ethernet-Datenpaket ist, Bestimmen durch das sendeseitige Gerät (300), dass ein Wert der Bits, die von den Informationen zur Art besetzt sind, ein erster Wert ist, wenn die Art des ersten Datenpakets das IP-Datenpaket ist, Bestimmen durch das sendeseitige Gerät (300), dass der Wert der Bits, die durch die Informationen zur Art besetzt sind, ein zweiter Wert ist, und wenn die Art des ersten Datenpakets das Ethernet-Datenpaket ist, das den IP-Paket-Header umfasst, Bestimmen durch das sendeseitige Gerät (300), dass der Wert der Bits, die durch die Informationen zur Art besetzt sind, ein dritter Wert ist.

8. Verfahren (200) nach einem der Ansprüche 1 bis 7, **dadurch gekennzeichnet, dass** eine Anzahl von Bits, die durch die Informationen zur Art besetzt sind, 2 Bits sind, um das Ethernet-Datenpaket, das IP-Datenpaket beziehungsweise das Ethernet-Datenpaket, das den IP-Paket-Header umfasst, anzugeben.

9. Sendeseitiges Gerät (300), Folgendes umfassend:
einen Prozessor (310), der dafür konfiguriert ist, eine erste Protokolldateneinheit, PDU, eines PDCP, Packet Data Convergence Protocol, zu erzeugen,
wobei die erste PDCP-PDU Informationen zur Art umfasst und die Informationen zur Art verwendet werden, um anzugeben, dass eine Art eines ersten Datenpakets in der ersten PDCP-PDU eines von einem Ethernet-Datenpaket, einem Internetprotokoll-, IP-, Datenpaket, und einem Ethernet-Datenpaket, das einen IP-Paket-Header umfasst, ist,
**dadurch gekennzeichnet, dass** das erste Datenpaket und ein zweites Datenpaket auf den gleichen Datenfunkträger, DRB, abgebildet werden, wobei sich die Art des ersten Datenpakets von einer Art des zweiten Datenpakets unterscheidet, die Informationen zur Art eine erste Konfigurationsdateikennung des ersten Datenpakets sind und der Prozessor (310) dafür konfiguriert ist, gemäß einem zweiten Abbildungsverhältnis zwischen einer Konfigurationsdateikennung und einer Art des Datenpakets zu bestimmen, dass eine Art des Datenpakets, die der ersten Konfigurationsdateikennung entspricht, die Art des ersten Datenpakets ist.

10. Sendeseitiges Gerät (300) nach Anspruch 9, **dadurch gekennzeichnet, dass** der Prozessor (310) für Folgendes konfiguriert ist:
Durchführen einer Header-Komprimierungsverarbeitung an dem ersten Datenpaket gemäß der Art des ersten Datenpakets, so dass die erste PDCP-PDU erzeugt wird.

11. Sendeseitiges Gerät (300) nach Anspruch 9 oder 10, **dadurch gekennzeichnet, dass** sich die erste Konfigurationsdateikennung in einem Datenfeld der ersten PDCP-PDU befindet.

12. Sendeseitiges Gerät (300) nach Anspruch 11, **dadurch gekennzeichnet, dass** das sendeseitige Gerät (300) ein Endgerät ist,
wobei das Endgerät ferner Folgendes umfasst:
einen Sendeempfänger (320), der dafür konfiguriert ist, das zweite Abbildungsverhältnis zu empfangen, das von einem Netzwerkgerät gesendet wird.

13. Sendeseitiges Gerät (300) nach Anspruch 12, **dadurch gekennzeichnet, dass** sich das zweite Abbildungsverhältnis in einer Funkressourcensteuerungs-, RRC-, Nachricht befindet.

14. Sendeseitiges Gerät (300) nach einem der Ansprüche 9 bis 13, **dadurch gekennzeichnet, dass** Bits, die von den Informationen zur Art in der ersten PDCP-PDU besetzt sind, reservierte Bits der ersten PDCP-PDU sind.

15. Sendeseitiges Gerät (300) nach einem der Ansprüche 9 bis 14, **dadurch gekennzeichnet, dass** eine Anzahl von Bits, die durch die Informationen zur Art besetzt sind, 2 Bits sind, um das Ethernet-Datenpaket, das IP-Datenpaket beziehungsweise das Ethernet-Datenpaket, das den IP-Paket-Header umfasst, anzugeben.

## Revendications

1. Procédé (200) de transmission de données, comprenant :
la génération, par un dispositif d'extrémité d'envoi (300), d'une première unité de données de protocole, PDU, de protocole de convergence de données en paquets, PDCP, (S210) ;
dans lequel la première PDU PDCP comprend des informations de type, et les informations de type sont utilisées pour indiquer qu'un type d'un premier paquet de données dans la première PDU PDCP est soit un paquet de données Ethernet, soit un paquet de données de protocole Internet, IP, soit un paquet de données Ethernet comprenant un en-tête de paquet IP ;
**caractérisé en ce que** le premier paquet de données et un deuxième paquet de données sont associés à un même support radio de données, DRB, le type du premier paquet de données étant différent d'un type du deuxième paquet de données, les informations de type étant un premier identifiant de fichier de configuration du premier paquet de données, et le procédé (200) comprenant en outre la détermination, par le dispositif d'extrémité d'envoi (300) en fonction d'une deuxième relation d'association entre un identifiant de fichier de configuration et un type de paquet de données, du fait qu'un type de paquet de données correspondant au premier identifiant de fichier de configuration est le type du premier paquet de données.

2. Procédé (200) selon la revendication 1, **caractérisé en ce que** la génération, par le dispositif d'extrémité d'envoi (300), de la PDU PDCP comprend :
l'exécution, par le dispositif d'extrémité d'envoi (300), d'un traitement de compression d'en-tête sur le premier paquet de données en fonction du type du premier paquet de données, afin de générer la première PDU PDCP.

3. Procédé (200) selon la revendication 1 ou 2, **caractérisé en ce que** le premier identifiant de fichier de configuration est situé dans un champ de données de la première PDU PDCP.

4. Procédé (200) selon la revendication 3, **caractérisé en ce que** le dispositif d'extrémité d'envoi (300) est un dispositif terminal,
le procédé (200) comprenant en outre :
la réception, par le dispositif terminal, de la deuxième relation d'association envoyée par un dispositif de réseau.

5. Procédé (200) selon la revendication 4, **caractérisé en ce que** la deuxième relation d'association est située dans un message de commande de ressources radio, RRC.

6. Procédé (200) selon l'une quelconque des revendications 1 à 5, **caractérisé en ce que** les bits occupés par les informations de type dans la première PDU PDCP sont des bits réservés de la première PDU PDCP.

7. Procédé (200) selon la revendication 6, **caractérisé en ce qu'**il comprend en outre au moins une des étapes suivantes : si le type du premier paquet de données est le paquet de données Ethernet, le dispositif d'extrémité d'envoi (300) détermine qu'une valeur des bits occupés par les informations de type est une première valeur ; si le type du premier paquet de données est le paquet de données IP, le dispositif d'extrémité d'envoi (300) détermine que la valeur des bits occupés par les informations de type est une deuxième valeur ; et si le type du premier paquet de données est le paquet de données Ethernet comprenant l'en-tête de paquet IP, le dispositif d'extrémité d'envoi (300) détermine que la valeur des bits occupés par les informations de type est une troisième valeur.

8. Procédé (200) selon l'une quelconque des revendications 1 à 7, **caractérisé en ce qu'**un nombre de bits occupés par les informations de type correspond à 2 bits servant à indiquer le paquet de données Ethernet, le paquet de données IP et le paquet de données Ethernet comprenant l'en-tête de paquet IP, respectivement.

9. Dispositif d'extrémité d'envoi (300), comprenant :
un processeur (310) configuré pour générer une première unité de données de protocole, PDU, de protocole de convergence de données en paquets, PDCP ;
dans lequel la première PDU PDCP comprend des informations de type, et les informations de type sont utilisées pour indiquer qu'un type d'un premier paquet de données dans la première PDU PDCP est soit un paquet de données Ethernet, soit un paquet de données de protocole Internet, IP, soit un paquet de données Ethernet comprenant un en-tête de paquet IP ;
**caractérisé en ce que** le premier paquet de données et un deuxième paquet de données sont associés à un même support radio de données, DRB, le type du premier paquet de données étant différent d'un type du deuxième paquet de données, les informations de type étant un premier identifiant de fichier de configuration du premier paquet de données, et le processeur (310) étant configuré pour déterminer, en fonction d'une deuxième relation d'association entre un identifiant de fichier de configuration et un type de paquet de données, qu'un type de paquet de données correspondant au premier identifiant de fichier de configuration est le type du premier paquet de données.

10. Dispositif d'extrémité d'envoi (300) selon la revendication 9, **caractérisé en ce que** le processeur (310) est configuré pour :
effectuer un traitement de compression d'en-tête sur le premier paquet de données en fonction du type du premier paquet de données, afin de générer la première PDU PDCP.

11. Dispositif d'extrémité d'envoi (300) selon la revendication 9 ou 10, **caractérisé en ce que** le premier identifiant de fichier de configuration est situé dans un champ de données de la première PDU PDCP.

12. Dispositif d'extrémité d'envoi (300) selon la revendication 11, **caractérisé en ce que** le dispositif d'extrémité d'envoi (300) est un dispositif terminal,
le dispositif terminal comprenant en outre :
un émetteur-récepteur (320) configuré pour recevoir la deuxième relation d'association envoyée par un dispositif de réseau.

13. Dispositif d'extrémité d'envoi (300) selon la revendication 12, **caractérisé en ce que** la deuxième relation d'association est située dans un message RRC.

14. Dispositif d'extrémité d'envoi (300) selon l'une quelconque des revendications 9 à 13, **caractérisé en ce que** les bits occupés par les informations de type dans la première PDU PDCP sont des bits réservés de la première PDU PDCP.

15. Dispositif d'extrémité d'envoi (300) selon l'une quelconque des revendications 9 à 14, **caractérisé en ce qu'**un nombre de bits occupés par les informations de type correspond à 2 bits servant à indiquer le paquet de données Ethernet, le paquet de données IP et le paquet de données Ethernet comprenant l'en-tête de paquet IP, respectivement.
